(19) **Europäisches Patentamt / European Patent Office / Office européen des brevets**

(11) **EP 2 627 130 B1**

(12) **EUROPEAN PATENT SPECIFICATION**

(45) Date of publication and mention
of the grant of the patent:
**08.04.2015 Bulletin 2015/15**

(51) Int Cl.:
***H04W 52/02*** (2009.01)

(21) Application number: **12155198.0**

(22) Date of filing: **13.02.2012**

(54) **Method for automatically de-activating a cell in a cellular network**

Verfahren zur automatischen Deaktivierung einer Zelle in einem zellulären Netzwerk

Procédé de désactivation automatique d'une cellule dans un réseau cellulaire

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.08.2013 Bulletin 2013/33**

(73) Proprietor: **ALCATEL LUCENT**
**92100 Boulogne-Billancourt (FR)**

(72) Inventors:
• **Delorme, Amaury**
**44708 ORVAULT (FR)**
• **Grand, Jean-Yves**
**44708 ORVAULT (FR)**

(74) Representative: **Lebkiri, Alexandre**
**Cabinet Camus Lebkiri**
**25, Rue de Maubeuge**
**75009 Paris (FR)**

(56) References cited:
**WO-A1-02/07464     US-A1- 2011 044 284**

• **"3rd Generation Partnership Project; Technical Specification Group Services and System Aspects; Telecommunication management; Study on Energy Savings Management (ESM) (Release 10)", 3GPP STANDARD; 3GPP TR 32.826, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 30 March 2010 (2010-03-30), pages 1-33, XP050402127, [retrieved on 2010-03-30]**

• **HUAWEI ET AL: "Discussion on Gradually Cell Switch off/on", 3GPP DRAFT; R3-092787_DISCUSSION ON GRADUALLY CELL SWITCH_DISC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 12 October 2009 (2009-10-12), XP050392286, [retrieved on 2009-11-19]**

• **CATT ET AL: "The evaluation of the ES parameters exchange solution", 3GPP DRAFT; R3-110076, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Dublin, Ireland; 20110117, 11 January 2011 (2011-01-11), XP050497116, [retrieved on 2011-01-11]**

• **TNO ET AL: "Inter-RAT Energy Saving Analysis", 3GPP DRAFT; R3-102084, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Madrid, Spain; 20100823, 15 August 2010 (2010-08-15), XP050452970, [retrieved on 2010-08-15]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 11)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.0.0, 20 December 2011 (2011-12-20), pages 1-194, XP050555023, [retrieved on 2011-12-20]
- "3rd Generation Partnership Project; Technical Specification Group Radio Access Network; Evolved Universal Terrestrial Radio Access (E-UTRA); Potential solutions for energy saving for E-UTRAN (Release 10)", 3GPP STANDARD; 3GPP TR 36.927, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V10.1.0, 26 September 2011 (2011-09-26), pages 1-22, XP050554061, [retrieved on 2011-09-26]
- "3rd Generation Partnership Project; Technical Specification Group Services and System Aspects; Telecommunication management; Energy Saving Management (ESM); Concepts and requirements (Release 10)", 3GPP STANDARD; 3GPP TS 32.551, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.1.0, 30 March 2011 (2011-03-30), pages 1-22, XP050476582, [retrieved on 2011-03-30]
- "3rd Generation Partnership Project; Technical Specification Group Services and System Aspects; Study on Operations, Administration and Maintenance (OAM) aspects of inter-Radio-Access-Technology (RAT) energy saving (Release 11)", 3GPP STANDARD; 3GPP TR 32.834, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V11.0.0, 9 January 2012 (2012-01-09), pages 1-26, XP050555218, [retrieved on 2012-01-09]

**Description**

FIELD OF THE INVENTION

The present invention relates to a method for automatically de-activating a cell in a cellular network.

BACKGROUND

Reducing energy consumption in a cellular network such as a GSM, a WCDMA, or a LTE network, is a major stake for obvious economical and environmental reasons.

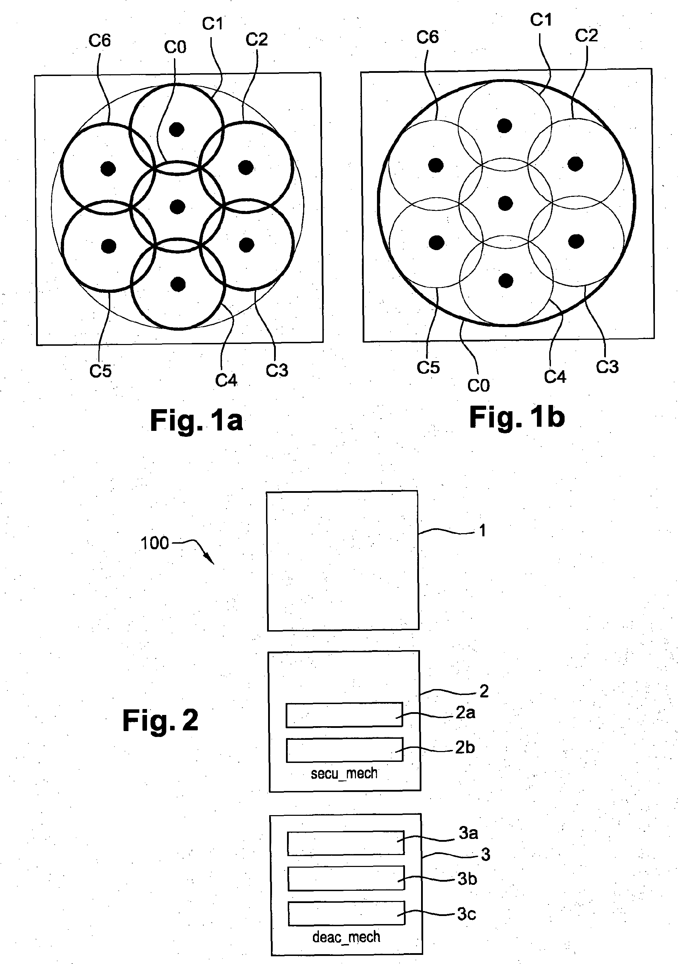

A well-known solution to reduce energy consumption is de-activating some cells of the network when the traffic is low. Indeed, during a traffic decrease, some cells can be de-activated while the geographical cover of others is increased to keep a full coverage, as illustrated in the figures 1a and 1 b. Figure 1 a represents a high traffic condition handled by seven active cells C0 to C6, schematized by circles. It is to be noted that active cells are represented with bold lines. As illustrated in figure 1b, when the traffic becomes low, cells C1 to C6 are de-activated, and the radius of C0 is increased. As a consequence of the reducing of the number of active cells, there is a significant reduction of the power consumption in the network.

However, the mechanism of cells de-activation requires human intervention: it is centralized and managed in an Operation and Maintenance Center (OMC).

The document WO 02/07464 discloses a method for reducing the power consumption of a base station. In particular, the base station measures its current traffic load in terms of number of users or overall throughput and when said traffic load is smaller than a threshold the base station enters in a power saving mode during which one or more sectors can be turned off.

The document US 2011/044284 discloses that, in order to achieve energy saving, the base stations employed as capacity booster (micro or femto base stations) monitor the traffic load and are able to switch off when the traffic drops below a certain threshold and stays below the threshold for certain time. A macro base station, employed as coverage cell, collects traffic load statistics of neighbouring coverage base stations and uses this information for determining the "switch on" threshold for capacity base stations. "Switch on" and "Switch off' messages are exchanged among base stations over the X2 interface.

The 3GPP Technical Report, TR, 32.826 v10.0.0 "Study on Energy Savings Management" discloses that energy savings actions are activated when the current traffic load of the cell decreases under a threshold for a given duration.

SUMMARY

It is an object of the invention to provide a method for automatically de-activating a cell of a cellular network, without human intervention, when the traffic in the network is low.

The present invention provides a method for automatically de-activating a cell C served by a base station BS in a cellular network according to claim 1, a corresponding computer program product for a computer of a base station according to claim 11 and a corresponding base station according to claim 12.

BRIEF DESCRIPTION OF THE DRAWINGS

Some embodiments of base station and/or methods in accordance with embodiments of the present invention are now described, by way of example only, and with reference to the accompanying drawings, in which:

- figure 1a schematically illustrates a high traffic condition in a radio cellular network;
- figure 1b schematically illustrates a low traffic condition in the network of figure 1a;
- figure 2 is a block diagram of a not limited embodiment of a method in accordance with the present invention;
- figure 3 is temporal diagram of flow exchanges in a not limited embodiment of the method of figure 2;
- figure 4 is a temporal diagram of flow exchanges in a not limited embodiment of the method of figure 2;
- figure 5 is a temporal diagram of flow exchanges in a not limited embodiment of the method of figure 2;
- figure 6 schematically illustrates a traffic condition in a single carrier radio cellular network in which the method of figure 2 is carried out;
- figure 7 schematically illustrates a model of a radio cellular network in which the method of figure 2 is carried out;
- figure 8 schematically illustrates a model of a radio cellular network in which the method of figure 2 is carried out;
- figure 9 schematically illustrates a medium traffic condition in the network of figures 7 and 8;
- figure 10 schematically illustrates a low traffic condition in the network of figures 7 and 8.

DESCRIPTION OF EMBODIMENTS

In the following description, well-known functions or constructions by the man skilled in the art are not described in detail since they would obscure the invention in unnecessary detail.

The present invention relates to a method 100 for automatically de-activating a cell C in a cellular network NTW. The network NTW comprises base stations, each serving one or several cells. Let us denote by BS the base station serving the cell C. The cell C has adjacent cells adj_cell, either served by the base station BS, or by other base stations. Let us denote these other base stations by BS_adj.

With respect to the base station BS, the method 100 of the present invention aims at automatically making a decision to de-activate the cell C at an appropriate time without any damage on the traffic, and then de-activate the cell C. "Without damaging the traffic" means that user equipments UE which were connected to the cell C have to switch to the adjacent cells adj_cell, and that these adjacent cells adj_cell are able to handle them in addition to their own traffic.

As illustrated in figure 2, the method 100 comprises the following steps:

- in a first step 1, the base station BS determines a traffic threshold TH below which the cell C can de-activate without damaging the traffic, and compares the traffic in the cell C with the threshold TH. Step 1 is periodically repeated as long as the traffic is higher than the threshold TH.
- in a second step 2, when the traffic in the cell C reaches the threshold TH, a security mechanism secu_mech is launched. The security mechanism aims at ensuring that the decreasing of the traffic in the cell C is not punctual, and that the adjacent cells adj_cell of the cell C are able to handle an additional traffic due to the cell C de-activation.
- in a third step 3, a de-activation mechanism deac_mech is launched: the base station BS reduces progressively its average power transmission in order to linearly decrease the cell C. At the same time, user equipments UE connected to the cell C switch over an adjacent cell adj_cell, using the standard process of handover. Then, the base station BS de-activates the cell C.

Steps 1 to 3 are detailed afterwards:

Step 1: threshold TH determination

To dynamically determine the threshold TH below which the base station BS can de-activate the cell C without damaging the traffic, and ensure the adjacent cells adj_cell are able to handle an additional traffic, the base station BS has to determine:

- how user equipments UE connected to the cell C would spread over the adjacent cells adj_cell if the cell C is de-activated,
- and the current loads Load_adj of the adjacent cells adj_cell.

In order to estimate the repartition of the user equipments UE connected to the cell C, if the cell C is de-activated, the base station BS periodically collects measurements dedicated for the mobility function in handover processes, from these user equipments UE. These measurements are well-known by the man skilled in the art. Through these measurements, each user equipment UE reports which one of the adjacent cell adj_cell is the strongest, that is to say the adjacent cell adj_cell from which the user equipment UE receives the most powerful signal.

It is to be noted that some user equipments UE (let us denote them by unable_UE), for particular locations in the cell C, most especially at the center of the cell C, are not able to process measurements, because of interferences between cells. This case is rare, because the adjacent cells adj_cell are often configured such as the reference signal is orthogonal with the reference signal of the cell C, which avoids interferences between cells. Besides, this limitation concerns some specific locations in the cell C. However, for these few user equipments unable_UE which are not able to process measurements, an assumption is made to fictively allocate user equipments UE to adjacent cells_adj_cell:

- these user equipments unable_UE might be equally split over adjacent cells adj_cell;
- these user equipments unable_UE might be split over adjacent cells adj_cell in the same proportions than user equipments UE which have been able to process measurements;
- these user equipments unable_UE might be split over adjacent cells adj_cell according to the previous repartition.

With the measurements and the assumption, the base station BS is able to estimate the repartition of the user equipments UE if the cell C is de-activated. The repartition is expressed as a percent of load:

$$Load\_Percent\_Ck = (Load\_Meas\_Ck / Load\_Meas\_All\_adj\_cell) * 100$$

With: Load_Percent_Ck: percent of load of the cell C, which will be handled by the adjacent cell Ck;
Load_Meas_Ck: cumulated load measured by all user equipments UE which have reported the adjacent cell Ck as the strongest cell;
Load_Meas_All_adj_cell: cumulated load measured by all the user equipments UE connected to the cell C.

It is to be noted that the estimate of repartition can also be expressed as a percent of user equipment UE. In this case:

$$UE\_Percent\_Ck = (Nb\_Meas\_Ck / Nb\_Meas\_All\_adj\_cell) * 100$$

With: UE_Percent_Ck: percent of user equipment UE connected to the cell C, which will connect to the adjacent cell Ck if the cell C is de-activated;
Nb_Meas_Ck: number of user equipments UE which have reported the adjacent cell Ck as the strongest cell;
Nb_Meas_All_adj_cell: total number of user equipments UE connected to the cell C.

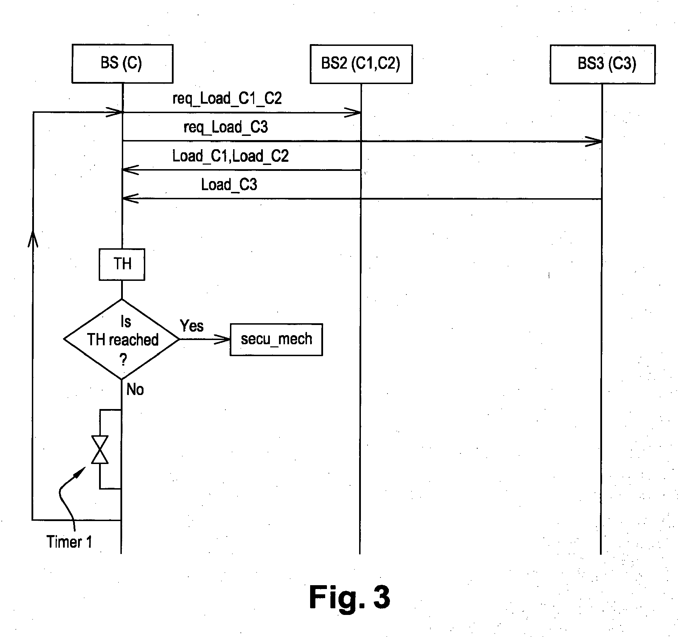

In order to get the current loads Load_adj of the adjacent cells adj_cell, the base station BS communicates with base stations BS_adj serving the adjacent cells adj_cell. The base station BS sends requests to these base stations BS_adj which send back the loads Load_adj. Flows between base stations are illustrated in figure 3, which is explained further.

When the base station BS has determined the estimated repartition of the user equipments UE if the cell C is de-activated, and the current load of the adjacent cells adj_cell, the threshold TH calculation is processed.

Hereafter is the formula for calculating the threshold TH as a load:

$$TH = MIN_k [(Max\_Load\_Ck - Load\_Ck) / Load\_Percent\_Ck]$$

With: Max_Load_Ck: maximal load that the adjacent cell Ck can support, and
Load_Ck: load of the adjacent cell Ck.

It is to be noted that the threshold can be expressed as a number of connected user equipments as well, because the number of connected user equipments is proportional to the load. In this case (not used in the following description):

$$TH = MIN_k [(Max\_UE\_Ck - UE\_Ck) / UE\_Percent\_Ck]$$

With: Max_UE_Ck: maximal number of user equipments UE that the adjacent cell Ck can support, and
UE_Ck: number of user equipments UE connected to the adjacent cell Ck.

The loads Load_adj are not constant, because user equipments connect and disconnect constantly, so base stations BS_adj serving the adjacent cells adj_cell have to be requested periodically by the base station BS. Moreover, it is to be noted that the base station BS memories the maximal returned values of the loads Load_adj to use them as Max_Load_Ck (or Max_UE_Ck).

As a consequence, the threshold TH has to be calculated periodically, as illustrated in figure 3. Figure 3 represents a temporal diagram representing an example of flows between the base station BS serving the cell C, and base stations BS2 and BS3. BS2 serves a first cell C1 and a second cell C2, and BS3 serves a third cell C3. Cells C1, C2 and C3 are adjacent cells with the cell C.

As represented, the base station BS sends X2 requests req_Load_C1_C2 and req_Load_C3 to base stations BS2 and BS3, to get the loads of the adjacent cells C1, C2 and C3. X2 requests are defined in the 3GPP standard TS36.423 released 10. Base stations BS2 and BS3 send back measurements indicating the loads of the adjacent cells C1, C2 and C3: Load_C1, Load_C2 and Load_C3. Then, the base station BS calculates the threshold TH. If the threshold TH is reached, that is to say if the load Load_C in the cell C is lower than the threshold TH, then the security mechanism (named secu_mech on the diagram) of the cell C is launched. Otherwise, a timer Timer1 is launched, and at the end of this timer Timer1, loads are requested again.

Step 2: security mechanism

The security mechanism is launched when the threshold TH is reached. This step comprises two sub-steps. In a first sub-step 2a, the base station BS ensures that the traffic decreasing is not punctual in checking that the load Load_C in the cell C stays under the threshold TH during a determined delay. This aims at avoiding a "ping pong effect" of traffic. Then, in a second sub-step 2b occurring after the first sub-step 2a, the base station BS ensures that the adjacent cells adj_cell are able to handle an additional traffic due to the de-activation of the cell C. This aims at avoiding a case in which just before de-activating the cell C, an adjacent cell adj_cell recovers an additional traffic from another cell which has been de-activated in the network.

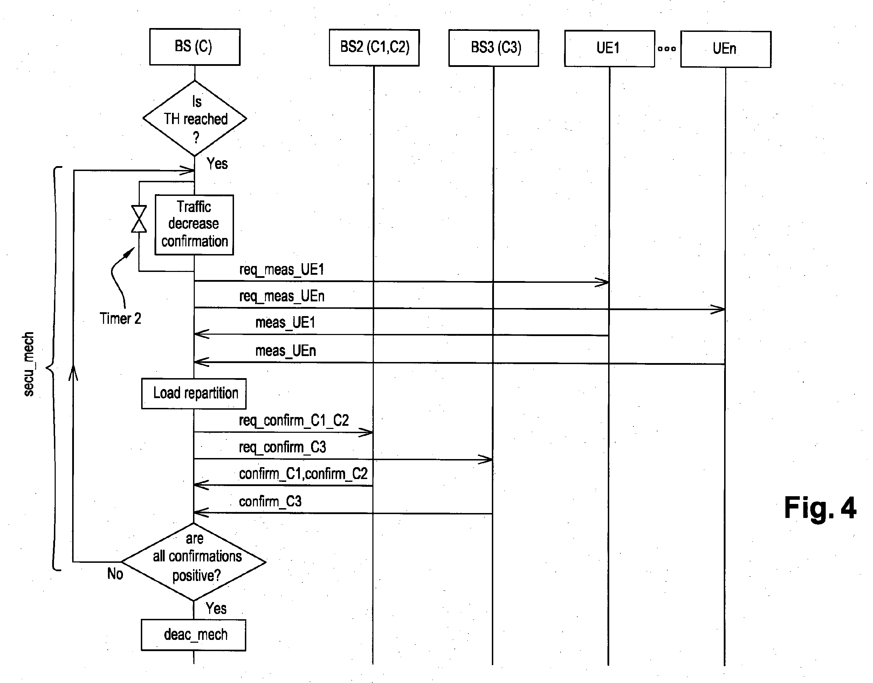

Figure 4 represents a temporal diagram representing an example of flows between the base station BS and the base stations BS2 and BS3; and flows between the base station BS and some user equipments UE1 to UEn connected to the cell C, during the security mechanism secu_mech.

When the threshold TH is reached, the security mechanism secu_mech is launched. As explained previously, the base station BS ensures that the traffic decreasing is not punctual: a Timer2 is started, and during this delay the base station BS checks that the traffic stays lower than the threshold TH.

If the traffic never went upper than the threshold TH during the delay determined by the timer Timer2, then the base station BS ensures that the adjacent cells adj_cell are able to handle an additional traffic due to the de-activation of the cell C. The base station BS sends X2 requests req_meas_UE1 to req_meas_UEn, to every user equipment UE1 to UEn, connected to the cell C. Every user equipment UE1 to UEn sends back measurements meas_UE1 to meas_UEn, indicating which is the strongest adjacent cell adj_cell. Using these measurements, the base station BS determines an estimate of the repartition of the user equipments UE on the adjacent cells adj_cells if the cell C is de-activated, as explained previoulsy.

Then, the base station BS sends requests req_confirm_C1_C2 and req_confirm_C3 to the base stations BS2 and BS3, to ensure that the cells C1, C2 and C3 are able to handle the additional traffic caused by the cell C de-activation. The base stations BS2 and BS3 trig the Call Admission Control in order to check their available resource, and send back confirmations confirm_C1, confirm_C2, confirm_C3 to the base station BS.

If one of these confirmations is negative, which means that one of the adjacent cells C1, C2 and C3 is not able to handle the additional traffic, then the security mechanism secu_mech is started again. If every confirmation is positive, then the de-activation mechanism deac_mech is launched.

Step 3: de-activation mechanism

This step comprises three sub-steps.

In a first sub-step 3a, the base station BS "bares" the cell C, which means that the base station BS puts the cell C in a forbidden state:

- no new user equipments UE can connect to the cell C, even if they detect the cell C as the strongest cell,
- but user equipments UE already connected to the cell C, stay connected.

The neighbouring base stations BS_adj are informed of the barring, in receiving from the base station BS an X2 message indicating that the cell is de-activated for energy saving reasons.

In a second sub-step 3b, the base station BS reduces progressively its average power transmission in order to linearly decrease the radius of the cell C. As a consequence, the cell C does not de-activates brutally, which prevents a de-connection of the user equipment UE connected to the cell C. At the same time, user equipments UE connected to the cell C switch over an adjacent cell adj_cell, using a well-known process of handover.

In a third sub-step 3c, the base station BS de-activates the cell C.

It is to be noted that in a single-carrier network, the first sub-step 3a of baring the cell C is favorably not realized; the de-activation mechanism directly begins with sub-step 3b. Indeed, every single-carrier cells cover different areas, contrary to multi-carriers where two cells can cover the same area operating on different carriers.

Conversely, cells can be re-activated using a re-activation mechanism. This mechanism is useful if the traffic increases, to avoid overloads. To this end, all base stations BS have to manage a list indicating the states of all adjacent cells. This list has to be updated each time a cell is de-activated or re-activated. For example, this avoids requesting a re-activation of a cell already re-activated.

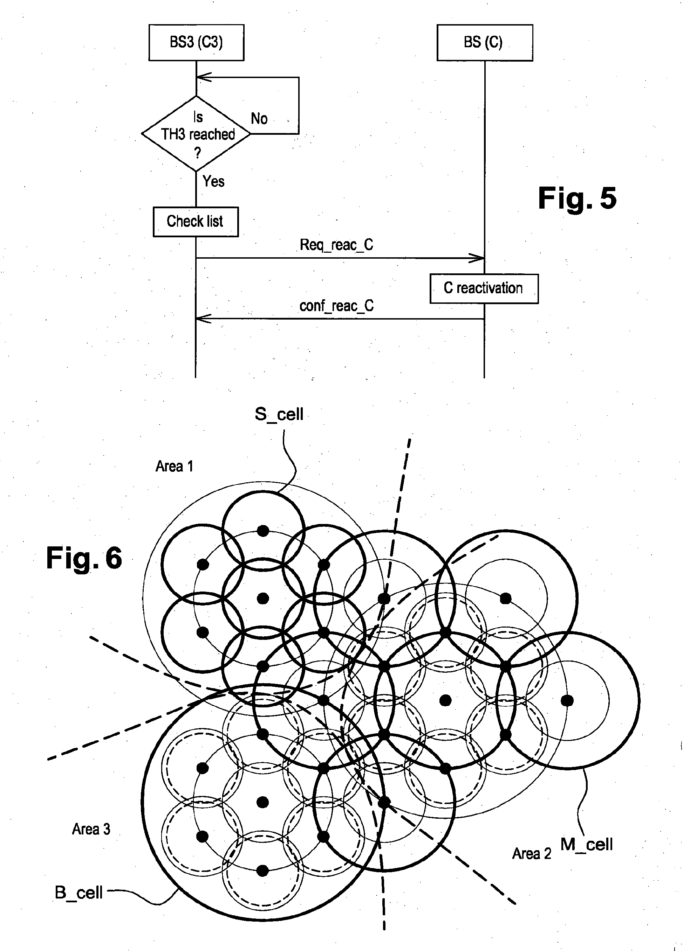

If several cells can be re-activate to avoid overloads, then it may be possible to define priorities in the list. Figure 5 represents a temporal diagram representing an example of flows between the base stations BS and BS3. In this example, the cell C is de-activated.

The base station BS3 periodically checks that the cell C3 is not overloaded (that means that its load stays lower than a threshold TH3). If the threshold TH3 is reached, then the base station BS3 refers to the list to know which cell can be re-activated. The cell C being de-activated, the base station BS3 sends a request req_reac_C to the base station BS to ask the cell C re-activation. Then the base station BS re-activates the C and sends a reactivation confirmation conf_reac_C to the base station BS3.

Below description gives examples in which the method 100 is or has been carried out to de-activate cells.

Coverage capabilities of cells, which depend on their radiuses, are pre-configured in the base stations which serve them. In the not limited embodiments described, there are three sizes of cells: small, medium and big. Radiuses of small cells are shorter than radiuses of medium cells, which are smaller of radiuses of big cells. Cells are pre-configured "small only", "small or medium", or "small or medium or big". In another not described embodiment, there are four sizes of cells: small, medium, big and very big.

In a first embodiment of the invention, the network NTW operates on a single carrier, i.e. all cells of the network NTW operate on the same carrier. Figure 6 illustrates an example of cells coverage when the traffic in the network NTW is not homogeneous. Cells are represented by circles, and active cells are drawn in bold lines. In this example, the network NTW is globally divided in three areas: in a first area Area1, the traffic is high; in a second area Area2, the traffic is medium; and in a third area Area3, the traffic is low. According to the present invention, the traffic in the first area Area1 is handled by small cells S_cell, the traffic on the second area Area2 is handled by medium cells M_cell, and the traffic on the third area Area3 is handled by big cells B_cell.

As we can notice, some cells are de-activated, which contributes to energy saving. These de-activated cells are represented with green dotted lines. They have been de-activated through the method 100 described upper.

In a second embodiment of the invention, the network NTW operates on multi-carriers. A model of this multi-carrier network NTW is offered by the invention, said model being optimized for energy saving: base stations BSt and cells served by these base stations BSt are localized and configured such as an optimal number of cells can be de-activated in keeping a full coverage of the network NTW. Moreover, if all cells served by a base station BSt are de-activated, then the base station BSt is put in idle, which is a supplementary energy saving. The model aims at optimizing the number of base stations BSt in idle if the traffic in the network NTW is low.

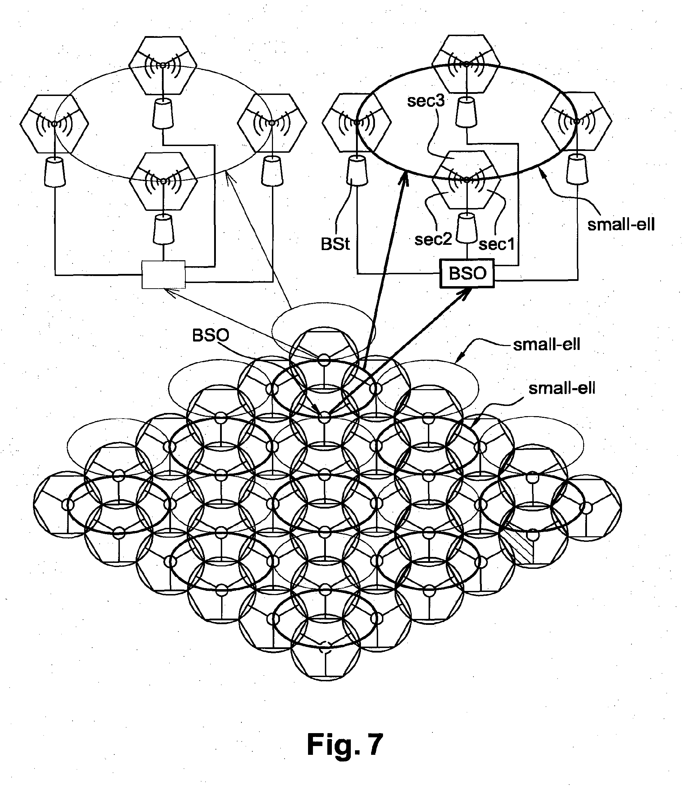

In the model described, base stations BSt are sectorized, which means that they use directional antennas, each pointing in different directions. Each base station BSt serves three sectors Sec1, Sec2, Sec3, as represented in figure 7. In addition, the notion of multi-carriers implies that each sector is split into several cells and each of these cells covers the whole sector, but with different carriers. In other words, a cellule is a sector working on a carrier. In this example, the network NTW operates on four carriers f1, f2, f3 and f4. As a consequence, each sector comprises four cells, so each base station BSt serves twelve cells.

In this example, base stations BSt are "distributed base stations". A distributed base station comprises a Core Control Module (CCM) which is a routing module, and a Remote Radio Head (RRH), well-known by the man skilled in the art, connected to the CCM by an optical fiber or a RF link. The RRH is an outdoor module, in which a transceiver radio module (TRM) is physically located. The advantage of this distributed architecture is that, in linking RRH of base stations BSt to a base station BS0, the base station BS0 manages some cells served by the base stations BSt, which are distant cells, that is to say that the base station BSt is able to de-activate these cells.

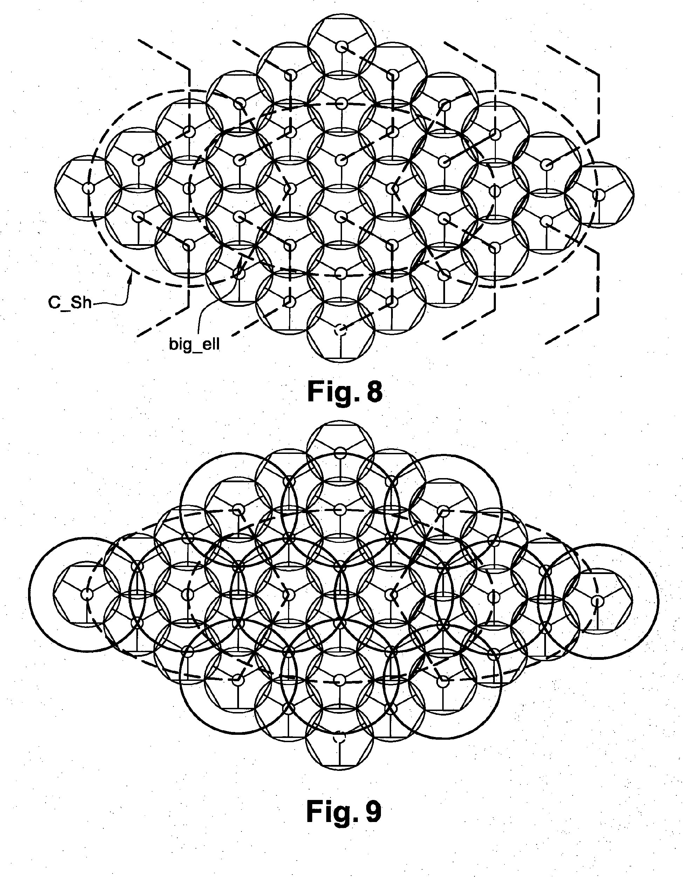

For an easier interpretation, the model of the multi-carrier network NTW is illustrated in figures 7 and 8. Sub-models represented in both figures have to be superposed to obtain the whole model. Figure 7 only deals with carriers f1 and f2, and figure 8 only deals with carriers f3 and f4.

As represented in figures 7 and 8, each base station BS0 is able to manage a set of four cells on a same carrier, thanks to the distributed architecture:

- dotted small circles represent base stations BS0 managing four cells on carrier f1;
- black small circles represent base stations BS0 managing four cells on carrier f2;
- blank small circles represent base stations BS0 managing four cells on carrier f3;
- striped small circles represent base stations BS0 managing four cells on carrier f4.

Only one of these four cells is located near the base station BS0, the others are distant and are managed by the base station BS0 thanks to the distributed base stations architecture.

Managing relations on a carrier (or several carriers) are illustrated by shapes: small ellipses small_ell (figure 7), big ellipses big_ell, or other closed shapes C_Sh (figure 8). Each shape small_ell, big_ell, C_Sh crosses four base stations BSt. One of these four base stations is the base station BS0 which manages the four cells on the same carrier:

- in figure 7, small ellipses small-ell in bold represents carrier f1, and small ellipses small-ell in thin lines represents carrier f2.

- in figure 8, striped big ellipses big_ell or closed shapes C_Sh represents carriers f3 and f4. That means that the same set of cells is managed by one base station for the carrier f3, and by another base station for the carrier f4.

In addition, the model defines coverage capabilities of the network NTW cells. As previously out-lined, coverage capabilities are pre-configured by the base stations BSt which serve them. In this model, "small or medium or big" cells are configured for f3 and f4 carriers, at base stations BSt crossing big ellipses big_ell. Moreover, "small or medium" cells are configured for f3 and f4 carriers, at base stations BSt crossing closed shapes C_Sh. As for "small only" cells, they are configured for f1, f2, f3 and f4 carriers at all base stations BSt of the network. The interest of these configurations will be understood further.

Another aspect of the model is the intervention of priorities for de-activating the cells of the network NTW. Indeed, method 100 for automatically de-activating a cell is applied to every cells of the network, but if the threshold is simultaneously reached for several cells at the same time, then priority decisions have to be made.

With respect to a cell C, priority depends on:

- the carrier the cell C is operating on
- the coverage capability of the cell, as explained previously

Below is a priority order defined by the model, for de-activating cells of the network NTW. From the highest priority to the smallest priority:

- "small only" cell on carrier f1
- "small only" cell on carrier f2
- "small only" cell on carrier f3
- "small only" cell on carrier f4
- "small or medium" cell on carrier f3
- "small or medium" cell on carrier f4
- "small or medium or big" cell on carrier f3
- "small or medium or big" cell on carrier f4

Hereafter is an example of a traffic evolution in the network NTW, pointing out the interest of the model.

- the traffic in the network NTW is initially high, and is handled by small cells on carriers f1, f2, f3 and f4. These cells are:

  o "small only" cells
  o "small or medium" cells on coverage small
  o "small or medium or big" cells on coverage small

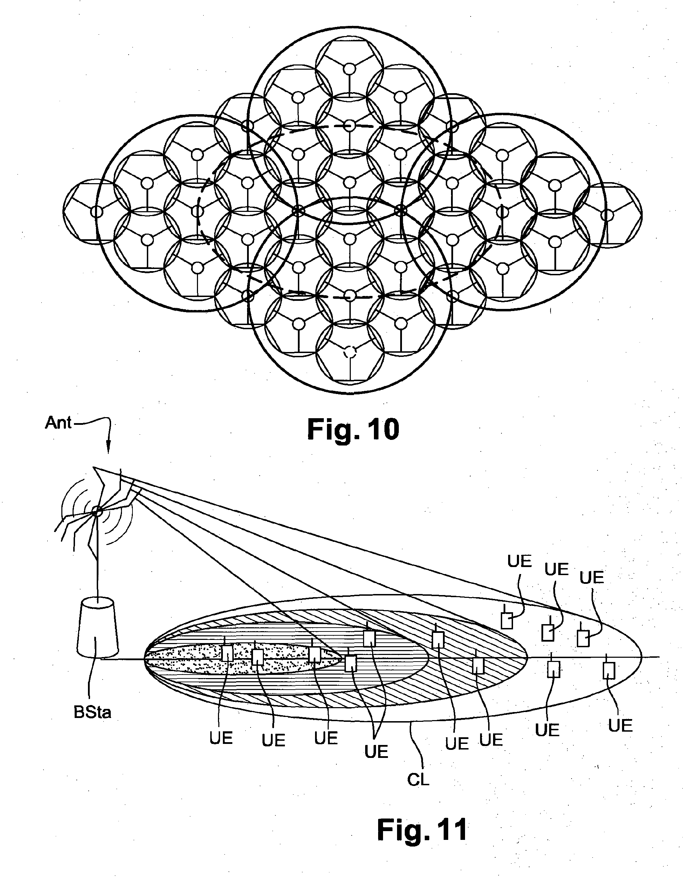

  These cells are served by all base stations BSt of the network, so the coverage is total.
- Then, the traffic decreases. According to the priority order, "small only" cells on carriers f1, f2, f3 and f4 are de-activated, and "small or medium" and "small or medium or big" cells have their radiuses increased: the whole traffic is now handled by medium cells, as represented in figure 8. The whole network stays covered because "small or medium" cells are configured at base stations BSt crossing closed shapes C_Sh, and "small or medium or big" cells are configured at base stations BSt crossing big ellipses big_ell
- Then, the traffic decreases again. According to the priority order, "small or medium" cells on carriers f3 and f4 are de-activated, and "small or medium or big" cells have their radiuses changed: the traffic is now handled by big cells, as represented in figure 10. The whole network still stays covered because "small or medium or big" cells are configured at base stations BSt crossing big ellipses big_ell

The interest for "small or medium" and "small or medium or big" cells to be managed by base stations for the carrier f3, and by other base stations for the carrier f4, as noticed previously and illustrated on figure 8, has to be noted. Indeed, according to priority order, if "small or medium" cells on carrier f3 are de-activated but "small or medium" cells on carrier f4 are active, then the coverage stays total, as represented on figure 9. Similarly, if "small or medium or big" cells on carrier f3 are de-activated but "small or medium or big" cells on carrier f4 are active, then the network still has a full coverage, as represented on figure 10.

As explained previously, some cells have a variable coverage, which means that their radiuses can be changed. Hereafter is offered a method for automatically adapting the antenna tilt of an antenna Ant mounted on top of a base station BSta serving a cell CL. Indeed, changing the tilt of the antenna Ant changes the radius of the cell CL, as illustrated in figure 11.

The principle is based on a channel quality indicator (QCI) transmitted by each user equipment UE1 to UEn connected to the base station BSta, to this base station BSta. The base station BSta calculates a global channel quality indicator (GCQI) form each individual QCI received. The GCQI is given by the formula hereafter:

$$\sum_{i=UE_1}^{UEn} [(CQI_i * W_i)] / \sum_{i=UE_1}^{UEn} Wi$$

With Wi being a weight depending on the modulation coding scheme (MCS), such as: Wi = 1 / MSC code rate.

To find the best antenna tilt, the base station BSta successively calculates the GCQI and performs a tuning of the antenna tilt till the GCQI is maximized, which corresponds to the best spectral efficiency offered to the user equipments UE1 to UEn, that is to say the optimal tilt according to the cell radius and the user equipments UE1 to UEn position.

## Claims

1. A method for automatically de-activating a cell C served by a base station BS in a cellular network, the method comprising the following steps, executed by the base station BS:

 • Collecting measurements, whereby each user equipment reports which one of the adjacent cell is the strongest, from the user equipments UE connected to the cell C;
 • Collecting current loads of adjacent cells, from base stations serving said adjacent cells;
 • Estimating, based on the collected measurements, a repartition over the adjacent cells of the user equipments UE connected to the cell C, assuming that the cell C is deactivated;
 • Calculating a threshold value TH, as a function of said estimated repartition and of said collected current loads;
 • Comparing a parameter representative of traffic in the cell C, with the threshold value TH;
 • If the parameter is less than or equal to the threshold value TH, de-activating of the cell C.

2. Method according to claim 1, wherein the parameter is the current load of the cell C, or the number of user equipments UE connected to the cell C.

3. Method according to any of the previous claims, wherein the calculating of the threshold value TH and the comparing with the parameter, are periodically carried out, as long as the parameter is not less than or equal to the threshold value TH.

4. Method according to any of the previous claims, comprising ensuring that the parameter stays less than or equal to the threshold value TH during a determined delay, said ensuring being processed before the de-activating of the cell C.

5. Method according to any of the previous claims, comprising ensuring that the adjacent cells of the cell C are able to handle an additional traffic due to a de-activation of the cell C, said ensuring being processed before the step of de-activating the cell C.

6. Method according to any of the previous claims, wherein the de-activating of the cell C comprises progressively reducing the radius of the cell C.

7. Method according to any of the previous claims, wherein the comparing of the parameter to the threshold value TH is applied at the same time to at least two cells C1, C2, and the de-activating is applied to a selected cell among said at least two cells C1, C2, according to at least one priority condition.

8. Method according to claim 7, wherein said at least one priority condition depends on coverage capabilities of said at least two cells C1, C2.

9. Method according to any of the claims 7 to 8, wherein if the cellular network operates on multi-carries, a priority condition depends on the carriers the at least two cells C1, C2 are operating on.

10. Method according to any of the claims 7 to 9, wherein if the at least two cells C1, C2 have different coverage capabilities, the cell which has least coverage possibilities is the one which is de-activated.

11. A computer program product for a computer of a base station BS, comprising a set of instructions, which when loaded into said computer, causes the computer to carry out a method according to any one of the previous claims 1 to 10.

12. A base station BS serving a cell C in a cellular network, configured to carrying out a method according to any of the previous claims 1 to 10.

**Patentansprüche**

1. Verfahren zum automatischen Deaktivieren einer von einer Basisstation BS in einem zellularen Netzwerk versorgten Zelle C, wobei das Verfahren die folgenden von der Basisstation BS durchgeführten Schritte umfasst:

   • Sammeln von Messwerten von den mit der Zelle C verbundenen Benutzergeräten UE, wobei jedes Benutzergerät meldet, welche der angrenzenden Zelle die stärkste ist;
   • Sammeln von aktuellen Lastwerten angrenzender Zellen von Basisstationen, welche die angrenzenden Zellen versorgen;
   • Schätzen, auf der Basis der gesammelten Messwerte, einer Verteilung der mit der Zelle C verbundenen Benutzergeräte UE auf die angrenzenden Zellen, wenn die Zelle C deaktiviert ist;
   • Berechnen eines Grenzwertes TH in Abhängigkeit von der besagten geschätzten Verteilung und von den besagten gesammelten aktuellen Lastwerten;
   • Vergleichen eines für den Verkehr in der Zelle C repräsentativen Parameters mit dem Grenzwert TH;
   • wenn der Parameter kleiner als der oder gleich dem Grenzwert TH ist, Deaktivieren der Zelle C.

2. Verfahren nach Anspruch 1, wobei der Parameter die aktuelle Last der Zelle C oder die Anzahl der mit der Zelle C verbundenen Benutzergeräte UE ist.

3. Verfahren nach einem beliebigen der vorstehenden Ansprüche, wobei das Berechnen des Grenzwertes TH und das Vergleichen mit dem Parameter periodisch erfolgen, solange der Parameter nicht kleiner als der oder gleich dem Grenzwert TH ist.

4. Verfahren nach einem beliebigen der vorstehenden Ansprüche, umfassend das Gewährleisten, dass der Parameter während einer bestimmten Zeitspanne kleiner als der oder gleich dem Grenzwert TH bleibt, wobei das besagte Gewährleisten vor Deaktivieren der Zelle C erfolgt.

5. Verfahren nach einem beliebigen der vorstehenden Ansprüche, umfassend das Gewährleisten, dass die an die Zelle C angrenzenden Zellen fähig sind, einen aufgrund der Deaktivierung der Zelle C entstehenden zusätzliche Verkehr abzuwickeln, wobei das besagte Gewährleisten vor Deaktivieren der Zelle C erfolgt.

6. Verfahren nach einem beliebigen der vorstehenden Ansprüche, wobei das Deaktivieren der Zelle C das schrittweise Verringern des Radius der Zelle C umfasst.

7. Verfahren nach einem beliebigen der vorstehenden Ansprüche, wobei das Vergleichen des Parameters mit dem Grenzwert TH gleichzeitig für mindestens zwei Zellen C1, C2 erfolgt, und das Deaktivieren auf einer ausgewählten der besagten mindestens zwei Zellen C1, C2 gemäß mindestens einer Prioritätsbedingung erfolgt.

8. Verfahren nach Anspruch 7, wobei die besagte mindestens eine Prioritätsbedingung von den Abdeckungsfähigkeiten der besagten mindestens zwei Zellen C1, C2 abhängt.

9. Verfahren nach einem beliebigen der Ansprüche 7 bis 8, wobei, wenn das zellulare Netzwerk im Multiträgerverfahren betrieben wird, eine Prioritätsbedingung von den Trägern, auf welchen die mindestens zwei Zellen C1, C2 arbeiten, abhängt.

10. Verfahren nach einem beliebigen der Ansprüche 7 bis 9, wobei, wenn die mindestens zwei Zellen C1, C2 über unterschiedliche Abdeckungsfähigkeiten verfügen, diejenige Zelle, die die niedrigsten Abdeckungsmöglichkeiten bietet, die Zelle ist, die deaktiviert wird.

**11.** Computerprogramm-Produkt für einen Computer einer Basisstation BS, umfassend einen Satz von Befehlen, welche, wenn das Programm auf dem besagten Computer geladen ist, bewirken, dass der Computer ein Verfahren gemäß einem beliebigen der vorstehenden Ansprüche 1 bis 10 durchführt.

**12.** Basisstation BS, welche eine Zelle C in einem zellularen Netzwerk versorgt und für das Durchführen eines Verfahrens gemäß einem beliebigen der vorstehenden Ansprüche 1 bis 10 konfiguriert ist.

**Revendications**

**1.** Procédé pour désactiver automatiquement une cellule C desservie par une station de base BS dans un réseau cellulaire, le procédé comprenant les étapes suivantes, exécutées par la station de base BS :

• collecter des mesures, chaque équipement utilisateur désignant laquelle des cellules adjacentes est la plus forte, à partir des équipements utilisateurs UE connectés à la cellule C ;
• collecter des charges actuelles de cellules adjacentes, à partir de stations de base desservant lesdites cellules adjacentes ;
• estimer, en fonction des mesures collectées, une répartition sur les cellules adjacentes des équipements utilisateurs UE connectés à la cellule C, en supposant que la cellule C soit désactivée ;
• calculer une valeur de seuil TH, en fonction de ladite répartition estimée et desdites charges actuelles collectées ;
• comparer un paramètre représentatif du trafic dans la cellule C à la valeur de seuil TH ;
• si le paramètre est inférieur ou égal à la valeur de seuil TH, désactiver la cellule C.

**2.** Procédé selon la revendication 1, dans lequel le paramètre est la charge actuelle de la cellule C ou le nombre d'équipements utilisateurs UE connectés à la cellule C.

**3.** Procédé selon l'une quelconque des revendications précédentes, dans lequel le calcul de la valeur de seuil TH et la comparaison avec le paramètre sont exécutés périodiquement, tant que le paramètre n'est pas inférieur ou égal à la valeur de seuil TH.

**4.** Procédé selon l'une quelconque des revendications précédentes, consistant à garantir que le paramètre reste inférieur ou égal à la valeur de seuil TH durant une période déterminée, ladite garantie étant traitée avant la désactivation de la cellule C.

**5.** Procédé selon l'une quelconque des revendications précédentes, consistant à garantir que les cellules adjacentes de la cellule peuvent gérer un trafic supplémentaire en raison d'une désactivation de la cellule C, ladite garantie étant traitée avant l'étape de désactivation de la cellule C.

**6.** Procédé selon l'une quelconque des revendications précédentes, dans lequel la désactivation de la cellule C comprend la réduction progressive du rayon de la cellule C.

**7.** Procédé selon l'une quelconque des revendications précédentes, dans lequel la comparaison du paramètre et de la valeur de seuil TH est appliquée simultanément à au moins deux cellules C1, C2, et la désactivation est appliquée à une cellule sélectionnée parmi lesdites au moins deux cellules C1, C2, conformément à au moins une condition de priorité.

**8.** Procédé selon la revendication 7, dans lequel ladite au moins une condition de priorité dépend des capacités de couverture desdites au moins deux cellules C1, C2.

**9.** Procédé selon l'une quelconque des revendications précédentes 7 à 8, dans lequel si le réseau cellulaire fonctionne sur des porteuses multiples, une condition de priorité dépend des porteuses sur lesquelles les au moins deux cellules C1, C2 fonctionnent.

**10.** Procédé selon l'une quelconque des revendications 7 à 9, dans lequel si les au moins deux cellules C1, C2 présentent des capacités de couverture différentes, la cellule qui présente le moins de possibilités de couverture est celle qui est désactivée.

**11.** Produit de programme informatique pour un ordinateur d'une station de base BS, comprenant un ensemble d'instructions qui, lorsqu'elles sont chargées dans ledit ordinateur, entraînent l'exécution par l'ordinateur d'un procédé selon l'une quelconque des revendications précédentes 1 à 10.

**12.** Station de base BS desservant une cellule C dans un réseau cellulaire, configurée pour exécuter un procédé selon l'une quelconque des revendications précédentes 1 à 10.

**Fig. 1a**

**Fig. 1b**

**Fig. 2**

secu_mech

deac_mech

**Fig. 3**

Fig. 4

EP 2 627 130 B1

BS3 (C3)

Is TH3 reached ?

No

Yes

Check list

Req_reac_C

BS (C)

C reactivation

conf_reac_C

**Fig. 5**

**Fig. 6**

S_cell

Area 1

Area 3

B_cell

Area 2  M_cell

**Fig. 7**

C_Sh

big_ell

**Fig. 8**

**Fig. 9**

**Fig. 10**

**Fig. 11**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0207464 A

- US 2011044284 A

**Non-patent literature cited in the description**

- Study on Energy Savings Management. *The 3GPP Technical Report, TR, 32.826*